# DEMANDE DE BREVET EUROPEEN

(11) **EP 1 416 667 A1**
(43) Date de publication de la demande: **06.05.2004**
(21) Numéro de dépôt: 03292583.6
(22) Date de dépôt: 17.10.2003
(51) Int. Cl.: H04L 9/32

(54) **Délégation de signature électronique par cryptographie multi-acteurs**

(30) Priorité: 31.10.2002 FR 0213721
(71) Demandeur: FRANCE TELECOM, 75015 Paris (FR)
(72) Inventeur: De Boursetty, Benoit, 75015 Paris (FR); Frisch, Laurent, 75013 Paris (FR); Mouton, Dimitri, 75015 Paris (FR)
(74) Mandataire: Cabinet Martinet & Lapoux

(57) **Abrégé**

Pour signer des données (D2) par l'un donné de M délégués (D) mandatés par N titulaires (T), avec M ≥ 2 et N = 1, ou M = 1 et N ≥ 2, le terminal (TED) du délégué donné lit dans un serveur de délégation (SG) des informations (IDD, KPUBD, CD, IDT, KPUBT, CT) sur les délégués et les titulaires du groupe ainsi constitué. Les données et les informations lues et une clé privée (KPRD) du délégué donné sont appliquées (E15) à un algorithme cryptographique (AA2) pour produire une signature (S2) portant ainsi une marque cryptographique de la délégation. Les données, les informations et la signature (S2) sont transmises à un terminal d'usager (TU) qui retrouve a posteriori les caractéristiques de la délégation de signature.

## Description

La présente invention concerne un procédé de délégation de signature électronique afin qu'un délégué exécute dans son terminal une signature électronique de données prédéterminées au nom au moins d'un titulaire l'ayant mandaté.

Une signature électronique garantit l'authenticité d'un document, c'est-à-dire authentifie de façon sûre un ou des signataires ayant exécuté la signature, et garantit que le document n'a pas été modifié. La signature électronique est souvent utilisée pour garantir la non-répudiation du document qui consiste à se prémunir contre un déni de l'auteur du document.

Les formats les plus couramment utilisés pour des messages signés sont les formats standards PKCS#7, CMS, XML-DSig et PGP.

Les formats connus de signature électronique n'offrent pas de moyen d'inclure une mention de délégation de signature. L'utilisation de la cryptographie "multi-acteurs" ("multi-agents") qui assure l'anonymat à un signataire appartenant à un groupe d'acteurs en signant au nom du groupe permet d'inclure des informations suffisantes à la gestion de la délégation de signature dans un cadre de validité des signatures précisé à l'avance.

Certains des formats de signature précités permettent d'intégrer plusieurs signatures dans un seul fichier. Par contre, ils ne sont pas prévus pour recueillir des signatures émises par un groupe.

Peu de systèmes de signature électronique permettent actuellement une délégation de signature.

Lorsqu'une délégation de signature existe dans un système de signature électronique, elle concerne en général une délégation de droits, avec un moyen de gestion d'habilitations effectuée en interne par le système, ou dans les meilleurs cas via un annuaire plus général.

Par exemple, dans un flux de travail ("workflow") peut être défini un groupe de "titulaires" qui ont le droit de prendre des décisions au sein du système. Pour pallier les absences des titulaires, un ou plusieurs "délégués" peuvent être adjoint à chacun des titulaires.

Sur décision d'un titulaire, par exemple lors d'une action dans le flux de travail comme une déclaration de congés, tout ou partie des habilitations du titulaire sont attribuées au délégué pendant une période de délégation prédéterminée afin de ne pas induire une rupture de fonctionnement dans le flux de travail. Les décisions prises par le délégué au sein du flux de travail le seront au nom du titulaire.

Le plus souvent, la trace de la délégation est perdue une fois la période de délégation achevée. Dans les meilleurs cas, la délégation est retrouvée en dépouillant des relevés ou registres (logs) du flux de travail, moyennant une opération de recherche complexe et coûteuse, surtout si la recherche doit être effectuée longtemps après.

Dans le cas de flux de travail incluant de la signature électronique, où l'objet de la "décision" est la signature électronique d'un document, il n'est pas prévu dans les formats de signature électronique existants un champ "signé au nom de" permettant de retrouver le titulaire au nom duquel la signature a été effectuée par le délégué. Le document signé, une fois sorti du cadre du flux de travail pour être traité par un tiers ou archivé, par exemple, ne comporte plus que la signature du délégué, sans trace de la personne au nom de laquelle le délégué a effectué la signature.

La délégation de pouvoir n'étant pas incluse dans la signature électronique ne peut donc pas être retrouvée une fois que le document signé est sorti de son contexte de délégation.

Or, la signature électronique doit être persistante, et avec elle doivent persister les éléments pour retrouver les conditions sous lesquelles la signature a été exécutée, comme par exemple l'adjonction de la mention écrite "par intérim" dans le cas d'une signature manuscrite.

En outre, la délégation nécessite souvent, soit pour le titulaire, soit pour le délégué, soit pour les deux, une intervention auprès du moyen de gestion habilitant les délégations.

Pour exprimer le fait qu'une signature manuelle est effectuée par intérim, la signature manuelle est suivie d'une mention manuscrite du type "par procuration" sur le document signé. Ce procédé peut se refléter à l'identique sur un document signé électroniquement à condition que dans le format du document à signer, un champ soit prévu pour accueillir une telle mention.

Malheureusement, ce champ n'existe pas et l'adjonction de celui-ci est difficile dans le format du document. Une analyse sémantique du contenu du document est nécessaire pour retrouver des informations ne portant que sur la signature.

Il sera noté que, très souvent, dans des formulaires ou dans des flux de travail ("workflows"), une signature électronique ne porte pas sur le document tel qu'un texte mis en forme, mais plutôt sur un ensemble de données concaténées en une chaîne de caractères, affichable ou non, appartenant au document électronique.

La signature électronique traditionnelle telle que présentée ci-dessus transpose dans le monde électronique le mécanisme de signature manuelle. Une autre forme de signature électronique, reposant sur des techniques de cryptographie multi-acteurs ("multi-agents"), offre des caractéristiques à la fois proches de la signature simple, comme une certaine garantie de la provenance d'un message, et radicalement différentes, telles que l'anonymat du signataire parmi un groupe de personnes. Trois techniques sont décrites ci-après:
- la signature de groupe ("group-signature") qui est effectuée par un membre d'un groupe administré par une autorité ;
- la signature d'ensemble ("set-signature") qui est effectuée par une personne au nom d'un ensemble de personnes sans qu'elles fassent partie d'un groupe administré ; et
- la signature multi-acteurs triviale par laquelle sont ajoutées des informations sur les autres acteurs que l'on souhaite inclure dans le procédé de signature.

La signature de groupe fait intervenir au moins un signataire, un groupe de membres auquel le signataire appartient, et une autorité. Un membre du groupe signe au nom du groupe, mais de manière anonyme. Quand une entité valide une signature de groupe, elle est certaine que la signature a bien été effectuée par l'un des membres du groupe, sans pouvoir déterminer lequel. Une seule entité est habilitée à déterminer l'identité du signataire : l'autorité. Dans ce cas, on dit que l'autorité "ouvre" la signature et que la signature de groupe est à "anonymat limité". L'anonymat peut être utilement levé, notamment en cas de fraude ou pour assurer le bon fonctionnement d'un service, comme par exemple les enchères.

En général, la signature de groupe nécessite une phase d'initialisation et met en jeu des clés cryptographiques spécifiques.

En outre, la signature de groupe exige de l'administrateur du groupe une gestion du groupe avec des opérations complexes pour l'adhésion d'un nouveau membre au groupe et le retrait d'un membre du groupe.

La signature d'ensemble diffère de la signature de groupe en ce que :
- les personnes de l'ensemble aux noms desquelles le signataire produit sa signature d'ensemble n'appartiennent pas à un groupe, c'est-à-dire ne sont pas enregistrées comme faisant partie d'un groupe, et donc n'ont pas donné de consentement explicite ;
- il n'y a pas d'autorité ;
- à moins que le signataire ne soit explicitement mentionné, l'anonymat ne peut être levé.

On suppose tout de même que tous les signataires éventuels ont des clés publiques accessibles au signataire. Aucune phase de configuration n'est nécessaire. Comme il n'y a pas d'autorité, la signature d'ensemble offre un anonymat complet, c'est-à-dire que personne ne peut et ne pourra jamais déterminer qui est le signataire effectif.

La signature d'ensemble présente essentiellement trois inconvénients. Le premier est l'anonymat irrévocable qui est une propriété parfois peu souhaitable. Le deuxième est la lenteur présumée, et donc le coût informatique, d'une signature et d'une vérification, particulièrement lorsque le nombre de personnes de l'ensemble est élevé. Le troisième est la récupération des certificats de toutes les personnes de l'ensemble.

La méthode de signature multi-acteurs triviale fait appel à un objet fondamental permettant d'avoir confiance en une clé publique associée à une clé privée pour un usager, titulaire ou délégué. Cet objet est un certificat électronique émis par une autorité de certification. Il comprend notamment la clé publique à certifier, l'identité du possesseur de la clé publique, une période de validité de certificat, une liste d'attributs d'utilisation de clé correspondant à des droits d'utilisation de la clé appelés "key usages", supportant des paramètres tels que par exemple une clé de signature de message ou une clé de serveur web sécurisé, et une signature cryptographique des données ci-dessus contenues dans le certificat par une clé privée de l'autorité de certification émettrice du certificat. La confiance en la clé publique associée à une identité d'usager se ramène à la validité du certificat.

Selon la méthode de signature multi-acteurs triviale, le signataire effectue sa signature sur un document selon le procédé standard et ajoute dans un champ additionnel, outre son propre certificat, les certificats des autres acteurs que le signataire souhaite impliquer dans la signature, ainsi éventuellement qu'un champ à spécifier comportant des informations supplémentaires. Par exemple, dans le cas d'une délégation, le délégué inclut son propre certificat et celui du titulaire, et un champ mentionnant "par intérim".

Les certificats ajoutés de cette manière ne sont d'aucune nécessité ni d'aucune utilité dans la vérification de la signature, et ne sont présents que pour information. Ils peuvent parfaitement être retirés, ou d'autres peuvent être ajoutés, sans que la signature en soit modifiée. Le format du champ additionnel n'est pas standard, même s'il peut être inclus sous la forme d'un attribut non authentifié.

L'objectif de la présente invention est de remédier aux inconvénients des techniques antérieures de signature électronique dans le cadre d'une délégation portant sur la signature et relative à un groupe ou à un ensemble de plusieurs membres afin d'apporter a priori une preuve cryptographique multi-acteurs de la délégation dans la signature du délégué pour retrouver le ou les titulaires au nom duquel la signature a été exécutée.

Pour atteindre cet objectif, un procédé pour signer par délégation des données prédéterminées par l'un donné de M premiers membres mandatés par N deuxièmes membres, M et N étant des entiers dont l'un est égal à 1 et dont l'autre est au moins égal à 2, le premier membre donné ayant un terminal contenant des premières informations sur le premier membre donné, est caractérisé en ce qu'il comprend les étapes suivantes :
- en réponse à un premier identificateur du premier membre donné inclus dans les premières informations et transmis par le terminal à un moyen de délégation, une lecture de premières informations sur les M premiers membres et de deuxièmes informations sur les N deuxièmes membres dans le moyen de délégation depuis le terminal,
- une application des données prédéterminées, des premières informations et des deuxièmes informations, ainsi qu'une première clé privée du premier membre donné à un algorithme cryptographique implémenté dans le terminal pour produire une signature, et
- une transmission des données prédéterminées, des premières informations, des deuxièmes informations et de la signature vers tout terminal d'usager intéressé par les données prédéterminées.

Par exemple, les étapes précédentes succèdent à une vérification des données dans le terminal du premier membre donné.

Ainsi, la signature porte non seulement sur les données prédéterminées, telles qu'un document numérisé traité par le premier membre donné, à titre de délégué, au nom de M deuxièmes membres en tant que titulaires, mais également sur des premières informations sur les N premiers membres et sur des deuxièmes informations sur les M deuxièmes membres et contient ainsi la marque multi-membre cryptographique de la délégation. Ces informations formatées et transmises avec les données et la signature permettent de retrouver a posteriori de préférence les N deuxièmes membres, c'est-à-dire le ou les titulaires ayant mandatés le premier membre donné en tant que délégué, dans le terminal d'usager.

Selon une première variante, l'entier M est égal à 1 et l'entier N est au moins égal à 2.

Selon une deuxième variante, l'entier M est au moins égal à 2 et l'entier N est égal à 1.

Selon encore une autre variante, les M premiers membres et les N deuxièmes membres constituent un groupe ou ensemble de membres.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de télécommunication avec au moins trois terminaux incluant au moins un terminal de titulaire et un terminal de délégué pour la mise en oeuvre du procédé de délégation de signature électronique selon l'invention ;
- la figure 2 est un algorithme d'étapes principales selon la technique antérieure pour exécuter une signature électronique par un usager-titulaire ; et
- la figure 3 est un algorithme d'étapes principales du procédé de délégation de signature électronique selon l'invention.

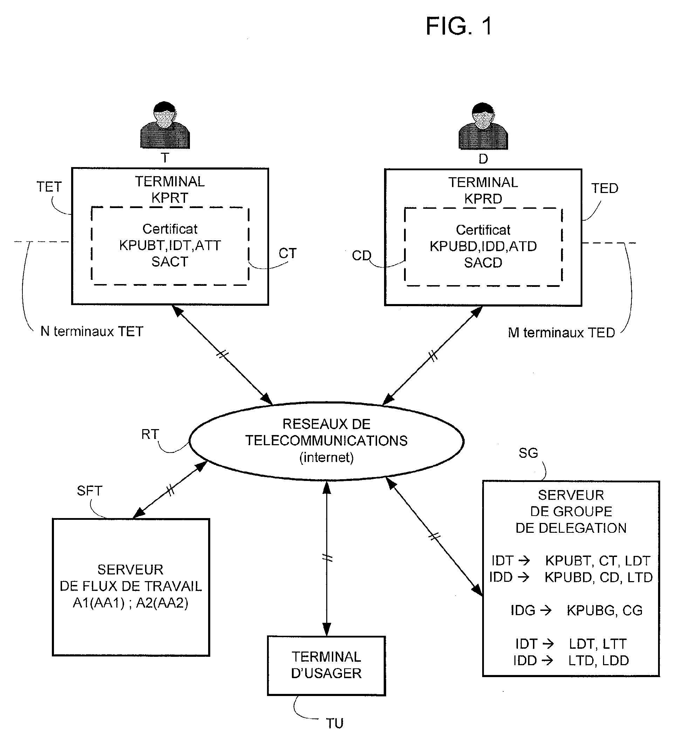

En référence à la figure 1, un système de télécommunication pour la mise en oeuvre du procédé de délégation de signature électronique selon l'invention est décrit ci-après dans le cadre d'un flux de travail ("workflow").

Le système de télécommunication comprend essentiellement des serveurs SFT et SG reliés à un réseau de télécommunications RT comprenant le réseau internet, et des terminaux d'usager, tels que des terminaux TET, TED et TU, reliés par des réseaux d'accès au réseau internet dans le réseau RT.

Le premier serveur SFT est un serveur de flux de travail qui répartit des tâches entre plusieurs terminaux d'usager d'au moins un groupe prédéterminé. Un groupe G comprend N+M membres-usagers, N et M étant des entiers dont l'un est au moins égal à 1 et dont l'autre est au moins égal à 2. Ainsi un groupe peut comprendre au moins trois membres, c'est-à-dire N=1 titulaire T et M ≥ 2 délégués D mandatés par le titulaire T, ou bien selon une autre variante, comprendre N ≥ 2 titulaires T et M=1 délégué commun D mandaté par les titulaires.

Afin de ne pas surcharger la figure 1, on n'y a représenté pour un groupe qu'un terminal TET d'un titulaire T parmi N terminaux de titulaire et qu'un terminal TED d'un délégué D parmi M terminaux de délégué. Par exemple, les terminaux TED et TET sont des ordinateurs personnels, et le réseau RT est un réseau local LAN du type Ethernet, ou sans fil WAN, ou comprend des réseaux d'accès reliés par le réseau internet. Selon un autre exemple, au moins l'un des terminaux TET et TED est un radiotéléphone et le réseau RT comprend en outre le réseau de radiotéléphonie cellulaire numérique dont dépend le radiotéléphone. Selon encore d'autres exemples, l'un au moins des terminaux TET et TED peut être un objet électronique portable tel qu'un assistant numérique personnel PDA ou un ordinateur portable.

Les terminaux TET, TED peuvent être répartis dans des lieux différents et travailler à des instants différents sur des projets communs et de façon différente, via le serveur de flux de travail SFT. Le serveur SFT contient un logiciel de gestion d'un ensemble de tâches répétitives le long d'un circuit de travail. Le logiciel de gestion organise le travail le long de la chaîne de travail en fédérant des documents numérisés et des données numériques entre les membres du groupe. Le serveur SFT a pour fonctions principales de gérer des procédures de travail, coordonner les charges et les ressources entre les terminaux des membres du groupe et superviser le déroulement des opérations entre ceux-ci.

Le flux de travail nécessite ici l'engagement de la responsabilité des membres du groupe qui y prennent part. Cet engagement est reflété par des signatures électroniques des membres du groupe sur des documents, ou plus généralement sur des données prédéterminées, qu'ils ont respectivement traités. Des délégations de certains membres, dits titulaires, du groupe envers d'autres membres, dits délégués, du groupe sont souvent présentes sous la forme d'une gestion d'habilitations effectuées par le deuxième serveur SG, dit serveur de groupe de délégation.

Le serveur de groupe de délégation SG, qui peut être confondu avec le premier serveur SFT, contient un annuaire ou une base de données incluant toutes les informations nécessaires à l'identification de chacun des membres de plusieurs groupes et à la réalisation de signatures électroniques. Chaque membre T, D du groupe G est par exemple désigné par un identificateur IDT, IDD correspondant à un certificat électronique CT, CD. Le certificat CT, CD contient notamment l'identificateur IDT, IDD, une clé publique KPUBT, KPUBD, une période de validité de certificat, une liste d'identificateur de délégué LDT, LDD et/ou une liste d'identificateur de titulaire LTT, LTD, éventuellement des attributs d'utilisation de clé ATT, ATD, etc., et finalement une signature cryptographique SACT, SACD des données contenues dans le certificat par une clé publique de l'autorité de certification ayant émise le certificat.

En variante, le groupe G lui-même est identifié par un identificateur IDG auquel correspondent un certificat CG du groupe et une clé publique KPUBG du groupe. Le serveur de groupe SG consigne ainsi les relations entre les membres de chaque groupe en présence : en particulier, l'identificateur IDT, IDD de chaque usager T, D donne accès à une liste de titulaires LTT, LTD qui ont mandaté l'usager comme délégué et/ou une liste de délégués LDT, LDD qui ont été mandatés en tant que délégués par l'usager.

Selon une autre variante, les tables des données incluses dans le serveur de groupe SG sont implémentées sous la forme d'une base de données dans chacun des terminaux d'usager TET, TED.

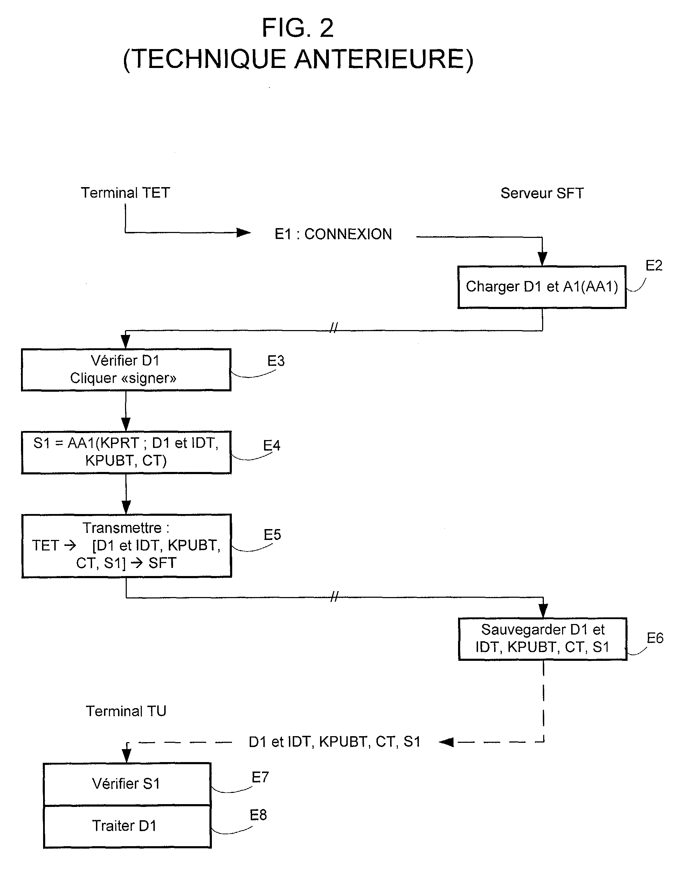

En référence maintenant à la figure 2, le titulaire T signe d'une manière connue dans son terminal TET des données D1, telles qu'un document numérique, transmises par le serveur de flux de travail SFT suivant des étapes principales E1 à E6.

A l'étape initiale E1, le terminal TET est mis en communication avec le serveur SFT à travers le réseau RT. Le serveur SFT commande l'affichage d'une tâche de signature de données prédéterminées D1 que le titulaire T doit signer dans le terminal TET. Par exemple, cette tâche de signature intervient après un formatage convenable des données D1 par le serveur SFT à la suite de modifications effectuées dans les données D1 par le titulaire T depuis le terminal TET.

Puis le terminal TET demande au serveur SFT le téléchargement d'une ou plusieurs pages contenant les données à signer D1 et une applet de signature A1, à l'étape E2. En variante, l'applet A1 est déjà implémentée dans le terminal TET, ou est téléchargée depuis un serveur spécialisé distinct du serveur de flux de travail SFT.

A l'étape E3, le titulaire T vérifie à l'écran du terminal TET que les données reçues D1 sont bien celles à signer. L'usager T décide de signer les données D1, par exemple en cliquant sur un bouton "signer", ce qui déclenche l'exécution d'un algorithme cryptographique asymétrique AA1 qui peut être au moins en partie inclus dans l'applet A1. L'algorithme AA1 est exécuté sur les données D1 en fonction d'une clé privée KPRT du titulaire T correspondant à la clé publique KPUBT. La clé privée KPRT du titulaire T se trouve dans une mémoire sécurisée amovible ou non du terminal TET. L'algorithme AA1 est implémenté soit dans le terminal, soit dans la mémoire sécurisée qui peut être une carte à puce.

Les données D1 et au moins un paramètre tel que l'identificateur IDT permettant de retrouver l'identité du titulaire T et donc sa clé publique KPUBT, et la signature électronique S1 résultant de l'exécution de l'algorithme AA1 sont transmis par le terminal TET au serveur SFT à travers le réseau RT, à l'étape E5. Le serveur SFT sauvegarde alors les données D1 avec la signature S1 à l'étape E6.

Ultérieurement, à des étapes E7 et E8, le terminal TU d'un usager qui souhaite prendre connaissance du document D1 requiert la transmission du document D1 avec la signature S1, et vérifie la signature S1 afin de traiter les données D1 lorsque la signature S1 est validée. La signature S1 est réputée validée lorsque les données D1 résultent de l'exécution de l'algorithme asymétrique AA1 auxquelles sont appliquées la clé publique KPUBT du titulaire T et la signature transmise S1 afin de récupérer des données D1' qui doivent être identiques aux données D1 reçues.

Selon d'autres réalisations, non seulement des données D1 mais également le certificat de titulaire CT ou une partie du certificat CT, telle qu'au moins l'identificateur IDT et la clé publique KPUBT, sont appliquées en tant que données, à l'algorithme d'authentification AA1 dans le terminal TET, pour produire à l'étape E15 la signature S1 qui est transmise avec les données D1 et le certificat CT à l'étape E5.

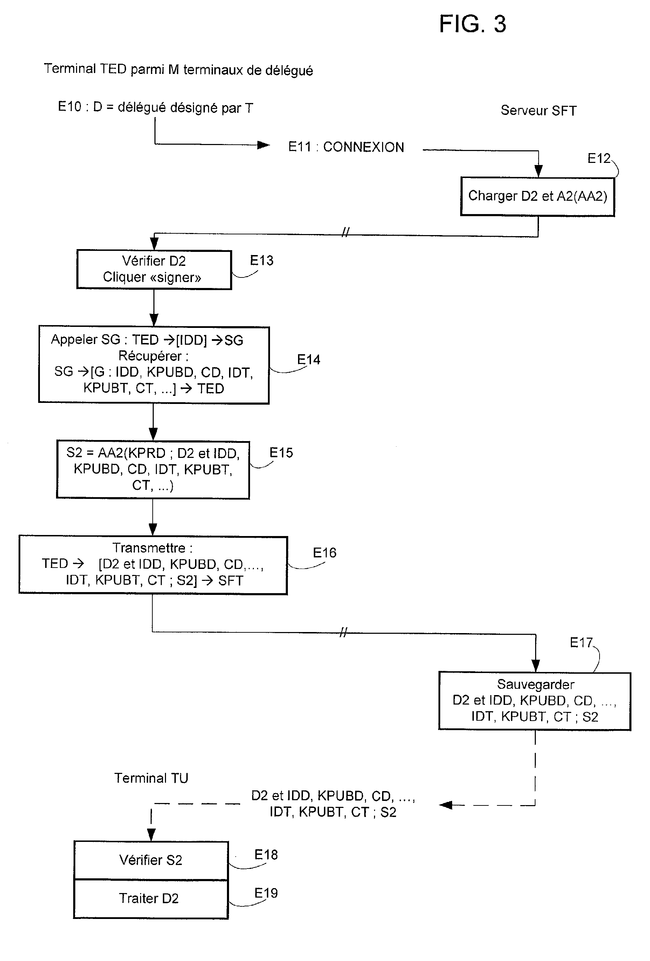

Pour qu'un délégué donné D parmi M délégués, avec M ≥ 2, effectue une signature de données prédéterminées D2 au nom et pour le compte d'un titulaire T, analogue à la signature S1 produite précédemment, les étapes suivantes E10 à E17 sont exécutées, en référence à la figure 3.

Initialement, le titulaire T a mandaté les M délégués D pour signer des documents à l'étape E10. Le serveur de groupe a inscrit cette délégation en introduisant l'identificateur IDT du titulaire T dans les listes de titulaire LTD liées aux identificateurs IDD des M délégués, et les identificateurs IDD des délégués dans la liste de délégué LDT liée à l'identificateur IDT du titulaire T.

A l'étape E11, le terminal TED du délégué donné D et le serveur SFT sont connectés à travers le réseau RT. Le délégué donné D prend connaissance de la tâche de signature qu'il a à effectuer au nom du titulaire T. La tâche de signature est affichée dans le terminal TED sous la commande du serveur SFT, par exemple à la suite d'une constitution d'un document numérisé formant des données prédéterminées D2 formatées par le serveur SFT, ou bien à la suite d'une révision du document, par le délégué donné D qui a été invité à effectuer cette tâche par le titulaire T.

A l'étape suivante E12, le terminal TED demande au serveur SFT de télécharger une ou plusieurs pages contenant les données D2 à signer et une applet de signature A2. L'applet de signature A2 ainsi téléchargée dans le terminal TED contient au moins partiellement un petit programme pour réaliser une signature des données D2 au nom du groupe G constitué au moins par le titulaire T et les M délégués, et non une simple signature électronique S1 selon le procédé connu montré à la figure 2. En variante, l'applet de signature A2 est déjà implémentée dans le terminal de délégué TED ou est téléchargée depuis un serveur spécialisé en applet de signature et distinct du serveur de flux de travail SFT.

A l'étape E13, le délégué D vérifie que le document affiché sur l'écran du terminal TED correspond bien aux données D2 à signer. Si cette vérification est positive, le délégué D déclenche les étapes suivantes E14, E15 et E16 dans le terminal TED contribuant à la formation de la signature des données reçues D2 au nom du groupe constitué par le titulaire T et les M délégués. Par exemple, l'exécution de cette signature est déclenchée en cliquant sur un bouton "signer", ou avec ou sans intervention d'une mémoire sécurisée amovible qui est introduite à cet instant ou introduite préalablement dans le terminal TED, et qui a enregistré au moins une clé privée KPRD du délégué donné D.

A l'étape E14, le terminal TED appelle le serveur de groupe de délégation SG qui peut être géré par l'administrateur du serveur de flux de travail SFT. Le terminal TED lit dans l'annuaire ou la base de données du serveur SG et récupère des premières informations sur les M délégués du groupe G(T,N,D) et des deuxièmes informations sur le titulaire T. Cette récupération d'informations est autorisée par le serveur SG après que le serveur SG a vérifié que le délégué donné D a reçu une délégation de pouvoir du titulaire T, en réponse à l'identificateur IDD transmis par le terminal TED, c'est-à-dire lorsque la liste LTD associée à l'identificateur IDD du délégué donné contient l'identificateur IDT. Les informations récupérées du groupe G sont des informations publiques sur les membres du groupe G, notamment leurs identités IDT, IDD, leurs clés publiques KPUBT, KPUBD, et leurs certificats CT, CD. En variante, les informations récupérées contiennent l'identificateur de groupe IDG, le certificat de groupe CG et donc la clé publique KPUBG du groupe G. Dans les informations récupérées sont de préférence omises les informations propres au délégué donné D telles que le certificat CD qui est déjà mémorisé dans le terminal TED.

Une signature électronique proprement dite S2 est exécutée sur les données D2 à l'étape E15. La signature S2 résulte de l'exécution d'un algorithme cryptographique asymétrique AA2 qui peut être au moins partiellement inclus dans l'applet téléchargée A2. Au moins les données D2 et une clé privée KPRD du délégué donné D qui correspond à la clé publique KPUBD et qui se trouve dans une mémoire sécurisée amovible ou non du terminal TED dans laquelle l'algorithme AA2 est implémenté, sont appliquées à l'algorithme AA2.

Selon l'invention, non seulement les données D2 mais également des premières informations sur les M délégués du groupe G incluant les identificateurs IDD et/ou les clés publiques KPUBD, ou plus complètement les certificats électroniques CD des délégués du groupe et des deuxièmes informations incluant l'identificateur IDT et/ou la clé publique KPUBT ou plus complètement le certificat électronique CT du titulaire T, qui pour la plupart ont été récupérés par le terminal TED à l'étape précédente E14 sont appliqués, en tant que données, à l'algorithme AA2. A la place de tout ou partie des premières informations précitées et tout ou partie des deuxièmes informations précitées appliquées à l'algorithme AA2, des informations globales sur le groupe G, telles que l'identificateur IG, et/ou la clé publique KPUBG ou plus complètement le certificat électronique CG du groupe sont appliquées avec les données D2 à l'algorithme AA2. Les informations globales sur le groupe G permettent de retrouver les premières et deuxièmes informations sur les M délégués et le titulaire T et donc sur les membres du groupe par un usager destinataire des données D2 signées. De préférence, les premières informations du délégué donné qui a signé sont concaténées en premier avec les informations sur les autres délégués et les deuxièmes informations sur le titulaire.

Les données D2, la signature S2 résultant de l'exécution de l'algorithme cryptographique AA2, et au moins les premières et deuxièmes informations KPUBT, KPUBD et/ou IDT, IDD ou CT, CD, ou bien encore IDG et/ou KPUBG ou CG sur le groupe G ayant été appliquées à l'algorithme AA2 sont transmises depuis le terminal TED au serveur de flux de travail SFT à travers le réseau RT, à l'étape E16.

Le serveur SFT sauvegarde alors les données D2 et les premières et deuxièmes informations transmises avec la signature S2 à l'étape E17.

Ultérieurement, à des étapes E18 et E19, le terminal TU d'un usager qui souhaite prendre connaissance des données D2 requiert la transmission des données D2 avec lesdites premières et deuxièmes informations et la signature S2 sauvegardées à l'étape précédente E17, et vérifie la signature S2 afin de traiter les données D2 lorsque la signature S2 est validée. La signature S2 est réputée validée lorsque les données D2 résultant de l'exécution de l'algorithme asymétrique AA2 auquel sont appliquées la clé publique KPUBD du délégué donné D et la signature S2 et les informations transmises KPUBT, KPUBD et/ou IDT, IDD ou CT, CD, ou bien encore IDG et/ou KPUBG ou CG afin de récupérer des données D2' qui doivent être identiques aux données D2 reçues, ce qui assure l'intégrité de celles-ci. Les informations servent à caractériser les membres du groupe G=(T,(N.D)) auprès de l'usager et à retrouver parmi les membres le délégué qui a effectivement signé. L'identité du signataire peut être signalée par l'ordre des informations transmises, par consultation du serveur SG ou par un indicateur de signataire ou une mention du type "signé par D au nom de T".

Selon une autre réalisation de signature multi-acteur inverse de la réalisation à M délégués et un titulaire décrite précédemment, le groupe contient N titulaires, avec N ≥ 2, ayant délégué des pouvoirs à un délégué, des premières informations sur le délégué et des deuxièmes informations sur les N titulaires sont appliquées avec les données D2 à l'algorithme cryptographique AA2 à l'étape E15, puis sont transmises avec les donnés D2 et la signature S2 à l'étape E16.

Selon d'autres réalisations pratiques, les applets A1 et A2 en langage Java peuvent êtres remplacées par des scripts prédéterminés ou des programmes indépendants de tout navigateur écrits dans un autre langage que le langage Java.

L'invention peut être applicable à un ensemble de membres dont l'un, le délégué, signe au nom de l'ensemble. Pour que l'usager du terminal TU connaisse l'identité du signataire, Il est nécessaire que les premières informations relatives au délégué contiennent additionnellement un indicateur de signataire.

En variante, un serveur intermédiaire entre le terminal de délégué TED et le serveur de flux de travail SFT peut assurer une vérification d'habilitation des délégations et une vérification d'appartenance à un groupe, comme à l'étape E14, une mise en forme et visualisation de signature comme à l'étape E15, une vérification de la validité cryptographique de la signature comme à l'étape E18, un horodatage de la signature, une inclusion d'une preuve de validité d'un certificat dans la signature, etc. Le serveur intermédiaire avec le terminal de délégué TED présente ainsi un rôle équivalent au serveur de délégation SG et au terminal TED selon la réalisation illustrée.

Au lieu de considérer un groupe d'au moins trois membres T et D, ces membres peuvent appartenir à un ensemble. Dans cette réalisation, le serveur d'ensemble remplaçant le serveur de groupe a une connaissance des données concernant les informations sur les membres de l'ensemble. Afin de connaître lequel des membres de l'ensemble a signé, de préférence la signature S2 exécutée par le délégué D est transmise avec au moins l'identificateur IDD et la clé publique KPUBD du délégué D afin que le destinataire des données D2 reconnaisse le signataire, en l'occurrence le délégué D.

L'invention n'est pas limitée à une application au flux de travail, mais peut être mise en oeuvre par exemple dans le cadre de publication de documents, de télé-procédure, ou de courrier électronique.

## Revendications

1. Procédé pour signer par délégation des données prédéterminées (D2) par l'un donné de M premiers membres (D) mandatés par N deuxièmes membres (T), M et N étant des entiers dont l'un est égal à 1 et dont l'autre est au moins égal à 2, le premier membre donné (D) ayant un terminal (TED) contenant des premières informations sur le premier membre donné, **caractérisé en ce qu'**il comprend les étapes suivantes :
- en réponse à un premier identificateur (IDD) du premier membre donné inclus dans les premières informations et transmis par le terminal (TED) à un moyen de délégation (SG), une lecture (E14) de premières informations (IDD, KPUBD, CD) sur les M premiers membres (D) et de deuxièmes informations (IDT, KBPUBT, CT) sur les N deuxièmes membres (T) dans le moyen de délégation depuis le terminal,
- une application (E15) des données prédéterminées (D2), des premières informations (IDD, KPUBD, CD) et des deuxièmes informations (IDT, KPUBT, CT), ainsi qu'une première clé privée (KPRD) du premier membre donné à un algorithme cryptographique (AA2) implémenté dans le terminal (TED) pour produire une signature (S2), et
- une transmission (E16) des données prédéterminées (D2), des premières informations, des deuxièmes informations et de la signature (S2) vers tout terminal d'usager (TU) intéressé par les données prédéterminées (D2).

2. Procédé conforme à la revendication 1, selon lequel les deuxièmes informations sur un deuxième membre (T) comprennent au moins un identificateur (IDT) du deuxième membre.

3. Procédé conforme à la revendication 1 ou 2, selon lequel les deuxièmes informations sur un deuxième membre (T) comprennent, en outre, une clé publique (KPUBT) ou un certificat électronique (CT) du deuxième membre.

4. Procédé conforme à l'une quelconque des revendications 1 à 3, selon lequel les premières informations sur un premier membre (D) comprennent un certificat électronique (CD) du premier membre.

5. Procédé conforme à l'une quelconque des revendications 1 à 4, selon lequel l'entier M est égal à 1 et l'entier N est au moins égal à 2.

6. Procédé conforme à l'une quelconque des revendications 1 à 4, selon lequel l'entier M est au moins égal à 2 et l'entier N est égal à 1.

7. Procédé conforme à l'une quelconque des revendications 1 à 4, selon lequel les M premiers membres (D) et les N deuxièmes membres (T) constituent un groupe ou ensemble de membres.

8. Procédé conforme à l'une quelconque des revendications 1 à 7, comprenant précédemment à la vérification (E13) des données (D2) par le premier membre donné, un chargement (E12) des données prédéterminées (D2) et d'un programme de signature (A2) incluant au moins partiellement l'algorithme cryptographique (AA2) depuis au moins un serveur (SFT) connecté (E11) au terminal (TED) du premier membre donné.
